# FASCICULE DE BREVET EUROPEEN

(11) **EP 3 388 880 B1**
(45) Date de publication et mention de la délivrance du brevet: **09.11.2022**
(21) Numéro de dépôt: 18166026.7
(22) Date de dépôt: 06.04.2018
(51) Int. Cl.: G02B 19/00, F21S 41/36, G02B 5/09, F21S 41/148, F21S 41/255, F21S 41/33, F21S 41/365, F21S 41/40

(54) **ENSEMBLE OPTIQUE COMPRENANT DES RÉFLECTEURS MUNIS DE DISCONTINUITÉS**
OPTISCHE EINHEIT MIT REFLEKTOREN, DIE DISKONTINUITÄTEN AUFWEISEN
OPTICAL ASSEMBLY COMPRISING REFLECTORS WITH DISCONTINUITIES

(30) Priorité: 11.04.2017 FR 1753167
(43) Date de publication de la demande: 17.10.2018
(73) Titulaire: Valeo Vision, 93012 Bobigny Cedex (FR)
(72) Inventeur: GOUSSET-ROUSSEAU, Simon, 93012 Bobigny Cedex (FR)
(74) Mandataire: Valeo Visibility

(56) Documents cités:
- EP-A1- 0 254 746
- WO-A1-2016/190165
- FR-A1- 2 773 604
- FR-A1- 2 944 578
- US-A- 4 914 747
- US-A1- 2013 343 076

## Description

L'invention concerne le domaine technique des modules optiques, notamment pour véhicule automobile.

### ETAT DE LA TECHNIQUE

On connaît des modules optiques pour véhicule automobile comprenant une source de lumière, des réflecteurs et une lentille de projection. En outre, ces modules optiques comprennent généralement un dispositif de coupure comprenant un bord de coupure et permettant notamment de masquer une partie du faisceau projeté par la lentille de projection.

Des réflecteurs connus comprennent trois cavités dont une cavité centrale agencée le long de l'axe optique de la lentille de projection et deux cavités latérales agencées transversalement de part et d'autre de la cavité centrale. La cavité centrale présente alors une fonction d'éclairage à l'infini tandis que les cavités latérales opèrent une fonction d'éclairage de la largeur de la route.

Afin de gagner en compacité, il est connu des modules optiques dans lesquels le réflecteur ne comprend que deux cavités, chaque cavité présentant elle-même deux surfaces optiques différentes mais connexes et séparées par une discontinuité. Ces modules optiques permettent de gagner en compacité tout en permettant d'opérer les fonctions d'éclairage central et en largeur.

Cependant, l'un des inconvénients de ces modules optiques est qu'ils génèrent des aberrations optiques, notamment des aberrations chromatiques, lorsque la lentille de projection forme l'image d'un objet à fort contraste comme le bord de coupure. Ces aberrations optiques sont générées en particulier par le passage de rayons lumineux à proximité des bords supérieurs et inférieurs de la lentille de projection. Ces aberrations chromatiques ont notamment pour effet la génération d'une image floue ou aux contours irisés, ce qui peut gêner le conducteur.

EP 0 254 746 A1 divulgue un phare de type projecteur dont la partie centrale du réflecteur distribue la lumière en dehors du point focal d'une lentille de projection, tandis que les parties latérales concentrent la lumière au point focal de la lentille de projection. US 4 914 747 A divulgue un projecteur de véhicule comprenant un dispositif de coupure. US 2013/343076 A1 divulgue un phare comprenant une diode électroluminescente (LED) montée pour émettre perpendiculairement à l'axe optique. FR 2 944 578 A1 divulgue un phare utilisant des foyers de réflecteur déplacés axialement pour produire une distribution de lumière lisse et homogène. FR 2 773 604 A1 divulgue un projecteur de véhicule comprenant deux sources lumineuses, un réflecteur composé et un écran réfléchissant. WO 2016/190165 A1 divulgue utiliser une lentille segmentée pour fournir un phare dans lequel la distribution inégale de la lumière est supprimée.

### BREF RESUME DE L'INVENTION

L'un des objets de l'invention est de résoudre le problème susmentionné. Pour ce faire, l'invention propose un module optique, notamment pour véhicule automobile, comprenant :
- une source de lumière émettant des rayons lumineux,
- une optique de projection présentant un axe optique et un foyer objet F_{L},
- un réflecteur comprenant deux cavités comportant chacune une surface de réflexion pour réfléchir les rayons lumineux en provenance de la source de lumière vers l'optique de projection,
- un dispositif de coupure conçu pour masquer une partie du faisceau lumineux, le dispositif de coupure comprenant un bord de coupure transversal, le bord de coupure étant agencé au niveau du foyer objet F_{L} de l'optique de projection,
chacune des cavités étant agencée de part et d'autre d'un plan P' axial comprenant l'axe optique, la surface de réflexion de chaque cavité étant divisée en une partie latérale et une partie centrale de la cavité, la partie centrale de chaque cavité étant agencée le long du plan axial P', la partie latérale de chaque cavité étant située transversalement à distance du plan axial, chaque surface de réflexion présentant un unique foyer objet qui est confondu avec la source lumineuse,
caractérisé en ce que la partie latérale de chaque cavité présente un unique foyer image confondu ou sensiblement confondu avec le foyer objet de l'optique de projection, et la partie centrale de chaque cavité comprenant plusieurs foyers images distincts du foyer objet de l'optique de projection,
les cavités étant conçues de sorte que les rayons lumineux réfléchis par les parties centrales du réflecteur passent à travers une partie centrale de l'optique de projection, la partie centrale de l'optique de projection s'étendant au voisinage d'une intersection entre l'optique de projection et le plan P',
les rayons lumineux réfléchis par les parties latérales du réflecteur passant à travers deux parties latérales de l'optique de projection situées transversalement de part et d'autre de la partie centrale de l'optique de projection, les rayons lumineux passant par les parties latérales de chaque cavité se propagent parallèlement à l'axe optique après leur passage par l'optique de projection de manière à éclairer à l'infini, les rayons lumineux passant par les parties centrales de chaque cavité étant projetés selon une direction non parallèle à l'axe optique après leur passage par l'optique de projection de manière à éclairer latéralement de part et d'autre du plan.

Selon différents modes de réalisation de l'invention, qui pourront être pris ensemble ou séparément :
- les surfaces de réflexion des cavités sont symétriques ou sensiblement symétriques par rapport au plan P',
- le plan P' est un plan vertical longitudinal,
- le dispositif de coupure est une plaque réfléchissante comprenant une surface réfléchissante, notamment confondue avec un plan P axial transversal et perpendiculaire au plan P', conçue pour réfléchir une partie des rayons lumineux des cavités vers l'optique de projection,
- la source de lumière présente un axe principal d'émission perpendiculaire au plan P,
- le dispositif de coupure est un cache conçu pour arrêter la propagation d'une partie des rayons lumineux vers l'optique de projection,
- les foyers images des parties centrales de chaque cavité sont sensiblement alignés le long de l'axe optique,
- le module optique comprend deux sources de lumière, chaque source de lumière émettant un faisceau lumineux respectivement vers l'une ou l'autre des cavités,
- la partie latérale et la partie centrale de chaque cavité présentent chacune une forme ellipsoïdale,

### BREVE DESCRIPTION DES FIGURES

L'invention sera mieux comprise, et d'autres buts, détails, caractéristiques et avantages de celle-ci apparaîtront plus clairement au cours de la description détaillée qui va suivre, d'au moins un mode de réalisation de l'invention donné à titre d'exemple purement illustratif et non limitatif, en référence aux dessins annexés dans lesquels :
- La figure 1 est une vue schématique d'une section verticale du module optique passant par l'axe optique, conformément à l'invention.
- La figure 2 est une vue du dessus, schématique, du dispositif de coupure, de l'optique de projection et d'une section horizontale du réflecteur du module optique, conformément à l'invention.
- La figure 3 est une vue schématique du dessus d'une partie du module optique, conformément à l'invention.
- La figure 4 est une vue schématique de la face d'entrée de l'optique de projection du module optique, conformément à l'invention.

### DESCRIPTION DETAILLEE

On adoptera par la suite et à titre non limitatif des orientations longitudinale, verticale et transversale indiquées par le trièdre "L, V, T" des figures. L'orientation verticale est ici utilisée à titre de repère géométrique sans rapport avec la direction de la gravité.

L'invention concerne un module optique 10, notamment pour véhicule automobile. Le module optique 10 est par exemple destiné à être installé dans un véhicule automobile de manière à éclairer la route. En particulier, le module optique 10 est conçu pour être assemblé dans un projecteur avant d'un véhicule automobile. Le module optique 10 est ici conçu pour produire un faisceau lumineux d'éclairage à coupure longitudinalement et vers l'avant, par exemple destiné à réaliser une fonction de feu de croisement.

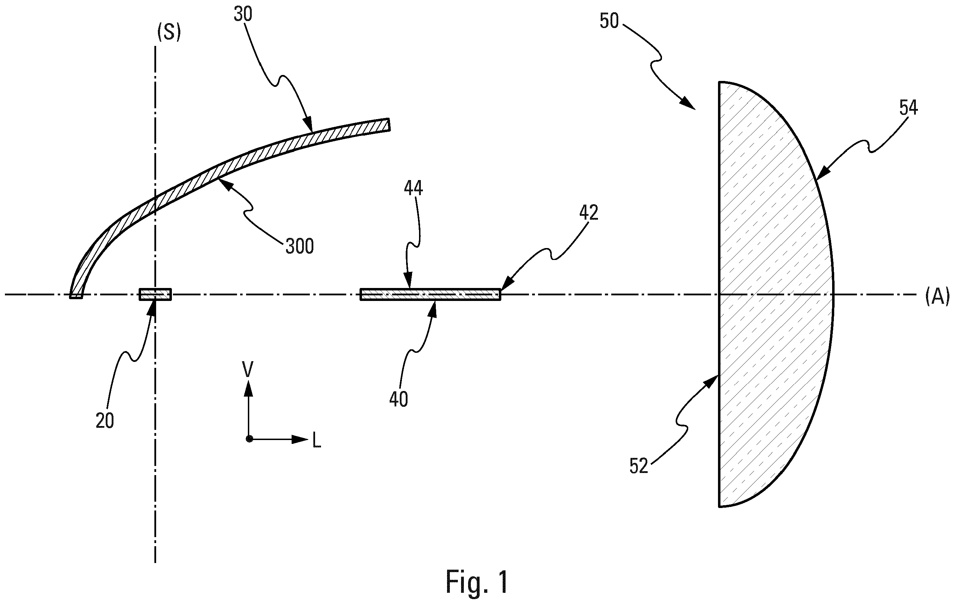

Comme illustré à la figure 1, le module optique 10 comprend ici une source de lumière 20, un réflecteur 30, un dispositif de coupure 40 et une optique de projection 50.

Ici, la source de lumière 20 présente un axe principal vertical d'émission S. Elle est conçue pour émettre des rayons lumineux vers le réflecteur 30. En variante, non illustrée ici, le module optique peut comprendre plusieurs sources de lumière.

Le réflecteur 30, le dispositif de coupure 40 et l'optique de projection 50 sont sensiblement agencés l'un après l'autre et dans cet ordre le long du trajet des rayons lumineux émis par la source de lumière 20.

Le module optique 10 est conçu de sorte que les rayons lumineux émis par la source de lumière 20 soient réfléchis par le réflecteur 30 vers l'optique de projection 50.

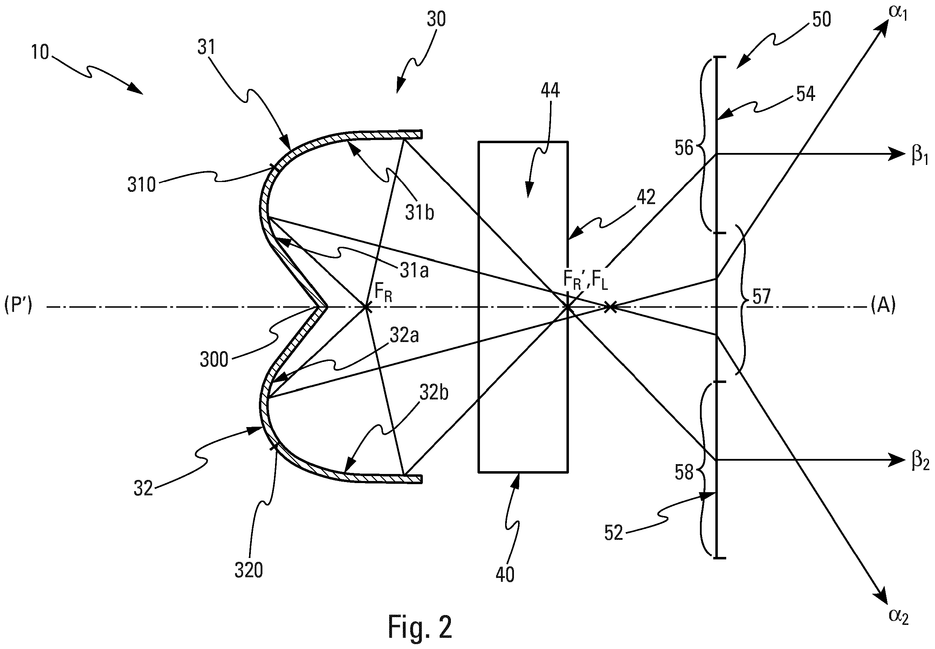

Comme illustré en particulier à la figure 2, l'optique de projection 50 présente un axe optique A longitudinal sur lequel est agencé un unique foyer objet F_{L}. L'optique de projection 50 est conçue pour être traversée par les rayons lumineux émis par la source de lumière 20. En particulier, les rayons lumineux passant par le foyer objet F_{L} de l'optique de projection 50 sont projetés à l'infini, parallèlement à l'axe optique A.

L'optique de projection 50 est ici représentée comme étant une lentille convergente comprenant notamment une première face, dite face d'entrée 52 et une deuxième face, dite face de sortie 54. Le module optique 10 est conçu de sorte que les rayons lumineux émis par la source de lumière 20 pénètrent dans l'optique de projection 50 par sa face d'entrée 52 et en ressortent par sa face de sortie 54.

Selon une variante non représentée de l'invention, l'optique de projection est formée par un objectif comportant plusieurs lentilles.

Le réflecteur 30 est agencé le long du trajet des rayons lumineux entre la source de lumière 20 et l'optique de projection 50. Le réflecteur 30 est conçu pour réfléchir les rayons lumineux issus de la source de lumière 20 vers l'optique de projection 50.

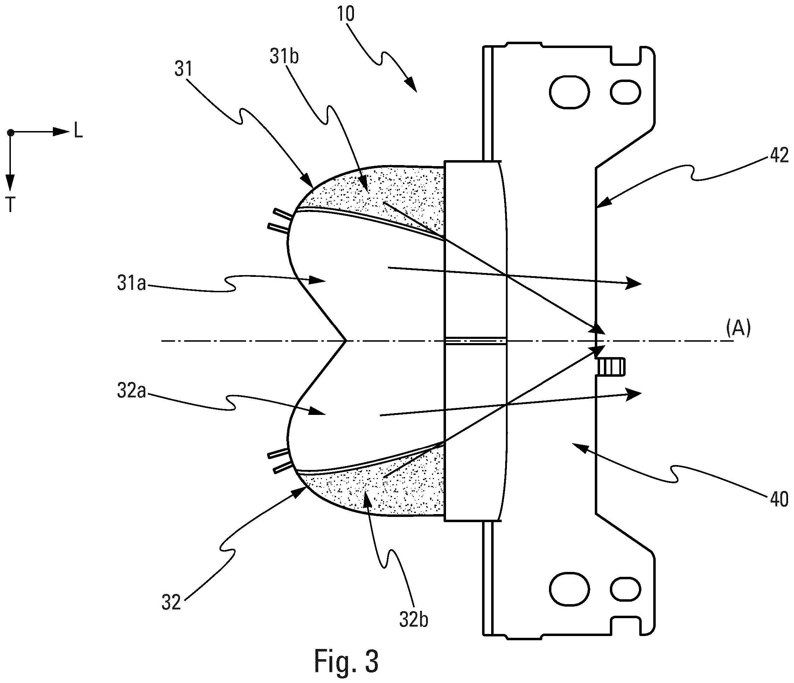

Comme illustré notamment à la figure 3, le réflecteur 30 comprend ici deux cavités 31 et 32. Les deux cavités 31 et 32 sont agencées de part et d'autre de l'axe optique A. En outre, les deux cavités 31 et 32 sont agencées de part et d'autre d'un plan vertical longitudinal P' comprenant l'axe optique A. Chaque cavité 31 et 32 comprend une surface de réflexion conçue pour réfléchir les rayons lumineux issus de la source de lumière 20 vers l'optique de projection 50. Les surfaces de réflexion de chaque cavité 31 et 32 sont sensiblement symétriques par rapport au plan vertical P'.

On note que l'axe d'émission S de la source de lumière 20 est ici compris dans le plan P'. La source de lumière 20 est en particulier agencée de manière à émettre des rayons lumineux vers les surfaces de réflexion des cavités 31 et 32 du réflecteur 30.

Les deux surfaces de réflexion des cavités 31 et 32 du réflecteur 30 sont ici jointives. Elles sont en outre solidaires l'une de l'autre. Il existe ainsi une zone de jonction 300 entre les surfaces de réflexion des cavités 31 et 32. Cette zone de jonction 300 est ici confondue avec le plan P'.

On note que le plan P' représente sensiblement un plan de symétrie orthogonale du réflecteur 30.

Le réflecteur 30 forme ici une seule et même pièce.

La surface de réflexion de chaque cavité 31, 32 est elle-même divisée en plusieurs parties. En particulier, ici, la surface de réflexion de chaque cavité 31, 32 comprend une première partie 31a, 32a, dite partie centrale, et une deuxième partie 31b, 32b dite partie latérale. Les parties centrale 31a, 32a et latérale 31b, 32b de chaque cavité 31, 32 sont jointives l'une à l'autre respectivement au niveau d'une zone 310, 320, aussi appelée discontinuité 310, 320 de la cavité 31, 32. La discontinuité 310, 320 s'étend ici le long d'une ligne courbe continue entre la partie latérale 31b, 32b et la partie centrale 31a, 32a de chaque cavité 31, 32.

Les parties centrales 31a, 32a de chaque cavité 31, 32 sont jointives l'une à l'autre au niveau de la zone de jonction 300 évoquée plus haut entre les deux cavités 31, 32. Autrement dit, les cavités 31, 32 du réflecteur 30 sont jointives l'une à l'autre au niveau de leurs parties centrales 31a, 32a respectives.

Les parties centrales 31a, 32a de chaque cavité 31, 32 sont ici agencées le long du plan P', de part et d'autre de celui-ci. On note que la partie centrale 31a de la cavité 31 et la partie centrale 32a de la cavité 32 sont symétriques l'une de l'autre par rapport au plan P'.

Les parties latérales 31b, 32b de chaque cavité 31, 32 sont agencées chacune transversalement à distance du plan P'. Ainsi chaque partie latérale 31b, 32b est séparée transversalement du plan P' par la partie centrale 31a, 32a associée. On note que la partie latérale 31b de la cavité 31 et la partie latérale 32b de la cavité 32 peuvent être sensiblement symétriques l'une de l'autre par rapport au plan P'.

La partie latérale 31b, 32b et la partie centrale 31a, 32a de chaque cavité 31, 32 présentent chacune des propriétés optiques différentes. Autrement dit, les parties latérales 31b, 32b des cavités 31 et 32 sont conçues pour réfléchir de manière différente les rayons lumineux issus de la source de lumière 20 par rapport aux parties centrales 31a, 32a associées.

En particulier, dans chaque cavité 31, 32, la partie latérale 31b, 32b présente un foyer objet F_{R} et un unique foyer image F_{R}'. Ici, le foyer objet F_{R} est confondu avec la source de lumière 20. Le foyer image F_{R}' est lui sensiblement confondu avec le foyer objet F_{L} de l'optique de projection 50. Plus précisément, il est à noter que, notamment afin d'adapter le faisceau lumineux projeté par l'optique de projection 50, le foyer image F_{R}' peut être légèrement décalé transversalement par rapport au foyer objet F_{L}.

De la sorte, des rayons lumineux β₁, β₂ issus de la source de lumière 20 et réfléchis sur l'une ou l'autre des parties latérales 31b, 32b du réflecteur 30 passent par le foyer objet F_{L} de l'optique de projection 50 et sont donc projetés, après leur passage par l'optique de projection 50, à l'infini, c'est-à-dire de manière parallèle à l'axe optique A.

Par ailleurs, dans chaque cavité 31, 32, la partie centrale 31a, 32a comprend un foyer objet et plusieurs foyers images. A titre d'illustration, parmi ces foyers images, trois foyers images F₁, F₂, F₃ sont représentés à la figure 2. Le foyer objet de la partie centrale 31a, 32a est le même que celui de la partie latérale 31b, 32b et est ici confondu avec la source de lumière 20. Les foyers images de la partie centrale 31a, 32a sont distincts du foyer objet F_{L} de l'optique de projection 50. En particulier ici, les foyers images de la partie centrale 31a, 32a sont alignés, ou sensiblement alignés, le long de l'axe optique A et décalés le long de l'axe optique A par rapport au foyer objet F_{L} de l'optique de projection 50.

De la sorte, des rayons lumineux α₁, α₂ issus de la source de lumière 20 et réfléchis sur l'une des parties centrales 31a, 32a de chaque cavité 31, 32 ne passent pas par le foyer objet F_{L} de l'optique de projection 50. Les rayons lumineux α₁, α₂ réfléchis sur les parties centrales 31a, 32a sont par conséquent projetés en sortie de l'optique de projection 50 de manière oblique par rapport à l'axe optique A. De plus, les parties centrales 31a, 32a sont imagées de manière floue à l'infini.

Dans chaque cavité 31, 32, la partie latérale 31b, 32b et la partie centrale 31a, 32a de la surface de réflexion présentent des formes différentes.

Ici, les parties centrales 31a, 32a et latérales 31b, 32b des cavités 31, 32, tout en ayant des formes différentes, présentent chacune sensiblement la forme d'une portion d'ellipsoïde. Autrement dit, la partie centrale 31a, 32a et la partie latérale 31b, 32b d'une même surface de réflexion présentent ici chacune une forme différente de portion d'ellipsoïde.

De plus, comme cela est visible notamment à la figure 2, les parties centrales 31a, 32a et latérales 31b, 32b des cavités 31, 32 présentent chacune une section, ladite section étant perpendiculaire au plan P', qui a la forme ou sensiblement la forme d'une portion d'ellipse.

Dans l'exemple décrit jusqu'ici, chaque cavité 31, 32 comprend deux parties distinctes dont la partie centrale 31a, 32a et la partie latérale 31b, 32b. En variante non illustrée, la surface de réflexion de chaque cavité 31, 32 pourra être divisée en au moins trois parties distinctes, chacune desdites parties distinctes réalisant une fonction d'éclairage différente.

Le dispositif de coupure 40 est ici une plaque réfléchissante. En variante non illustrée, le dispositif de coupure peut être un cache. La plaque réfléchissante 40 comprend notamment une surface réfléchissante 44, par exemple un miroir. La surface réfléchissante 44 est conçue pour réfléchir une partie des rayons lumineux vers l'optique de projection 50 qui ont été réfléchis par le réflecteur 30. La surface réfléchissante 44 est délimitée en partie par un bord de coupure 42 de la plaque réfléchissante 40.

Ici, la surface réfléchissante 44 de la plaque réfléchissante 40 est plane. La surface réfléchissante 44 s'étend de manière orthogonale au plan P' du réflecteur. En particulier, la surface réfléchissante 44 est comprise dans un plan P comprenant l'axe optique A et perpendiculaire au plan P'. Autrement dit, le plan P est un plan axial perpendiculaire au plan P'.

Le dispositif de coupure 40 permet d'éviter qu'un automobiliste situé devant le module optique 10 ne soit ébloui par celui-ci. Pour ce faire, la surface réfléchissante 44 est conçue de manière à dévier certains des rayons lumineux issus du réflecteur 30 vers une partie de l'optique de projection 50 plutôt qu'une autre. En outre, la surface réfléchissante 40 permet de multiplier sensiblement par deux la puissance du faisceau lumineux se propageant vers l'optique de projection 50.

La plaque réfléchissante 40 est agencée au sein du module optique 10 de sorte que le bord de coupure 42 soit agencé au niveau du foyer objet F_{L} de l'optique de projection 50. Ici, le bord de coupure 42 passe par le foyer objet F_{L} de l'optique de projection 50. On note que le bord de coupure 42 est ici droit et s'étend de manière perpendiculaire à l'axe optique A. Le bord de coupure s'étend en outre de manière perpendiculaire au plan P'.

De part cet agencement du bord de coupure 42, le module optique 10 est conçu pour que l'optique de projection 50 projette une image du bord de coupure 42 à l'infini.

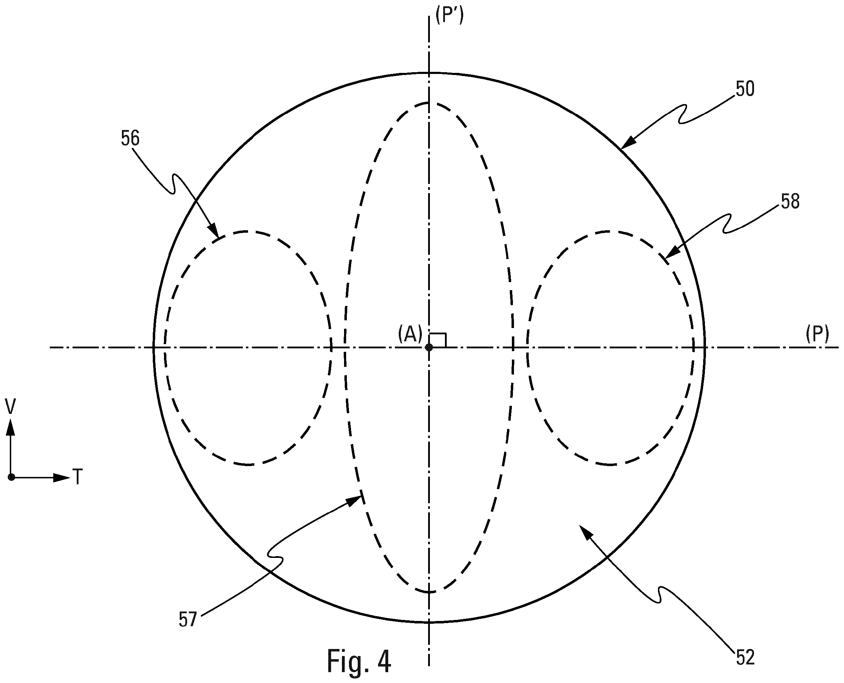

Comme illustré à la figure 4, on définit plusieurs régions sur la face d'entrée 52 de l'optique de projection 50. Ici, en particulier, la face d'entrée 52 de l'optique de projection 50 comprend une partie centrale 57 et deux parties latérales 56, 58, agencées transversalement de part et d'autre de la partie centrale 57.

La partie centrale 57 de l'optique de projection 50 correspond ici à une région de l'optique de projection 50 située au voisinage de l'intersection de la face d'entrée 52 de l'optique de projection 50 avec le plan P'. La partie centrale 57 de l'optique de projection 50 s'étend sensiblement d'un bord à un autre de l'optique de projection 50 le long de ladite intersection.

Les deux parties latérales 56, 58 de la face d'entrée 52 correspondent elles à des régions de la face d'entrée 52 de l'optique de projection 50 situées, transversalement, de part et d'autre de la partie centrale 57.

D'une part, le réflecteur 30 est conçu et agencé de sorte que les rayons lumineux α₁, α₂ issus de la source de lumière 20 et réfléchis par les parties centrales 31a, 32a du réflecteur 30 passent ensuite par la partie centrale 57 de l'optique de projection 50.

D'autre part, le réflecteur 30 est en outre conçu pour que les rayons lumineux β₁, β₂ issus de la source de lumière 20 et réfléchis par les parties latérales 31b et 32b du réflecteur 30 passent respectivement par les parties latérales 58 et 56 de l'optique de projection 50.

Une fois le module optique 10 installé dans le véhicule automobile, l'axe optique A de l'optique de projection 50 s'étend horizontalement. Le plan P' s'étend de manière verticale. Le plan P lui s'étend de manière horizontale. La surface réfléchissante 44 s'étend de manière horizontale.

De plus, une fois le module optique 10 installé dans le véhicule automobile, la partie centrale 57 de l'optique de projection 50 s'étend verticalement le long du plan P'. La face d'entrée 52 est sensiblement perpendiculaire à la fois au plan P et au plan P'. Les parties latérales 56 et 58 de la l'optique de projection 50 sont agencées respectivement à gauche et à droite de la partie centrale 57 de l'optique de projection 50 lorsque celle-ci est observée depuis sa face d'entrée 52. La source de lumière 20 est agencée sensiblement sous les surfaces de réflexion du réflecteur 30.

Les rayons lumineux α₁, α₂ issus de la source de lumière 20 passant par les parties centrales 31a, 32a du réflecteur 30 puis par la partie centrale 57 de l'optique de projection 50 sont conçues pour éclairer la largeur de la route à proximité du véhicule lorsque le véhicule est en circulation. Les rayons lumineux β₁, β₂ passant par les parties latérales 31b et 32b du réflecteur 30 puis respectivement par les parties latérales 58 et 56 de l'optique de projection 50 sont conçus, eux, pour éclairer au loin et devant le véhicule automobile.

Comme expliqué plus haut, les rayons lumineux β₁, β₂ passant par les parties latérales 56 et 58 de l'optique de projection 50 participent à la création à l'infini de l'image du bord de coupure 42 de la plaque réfléchissante 40. Avantageusement, ces rayons lumineux β₁, β₂ sont ensuite mélangés dans un faisceau lumineux produit en sortie de l'optique de projection 50, ces rayons β₁, β₂ étant projetés à l'infini. Le passage de ces rayons lumineux β₁, β₂ par l'une et l'autre des parties latérales 56 et 58 de l'optique de projection 50 permet ainsi de diminuer la gêne visuelle occasionnée par d'éventuelles aberrations chromatiques.

Autrement dit, des aberrations chromatiques sont certes générées au niveau de chaque partie latérale 56 et 58 de l'optique de projection 50 mais le mélange des rayons lumineux β₁, β₂ à l'infini, après leur passage par lesdites parties latérales 56 et 58 de l'optique de projection 50, permet leur superposition à l'infini et ainsi la diminution de la gêne occasionnée par les aberrations chromatiques.

## Revendications

1. Module optique (10), notamment pour véhicule automobile, comprenant :
- une source de lumière (20) émettant des rayons lumineux,
- une optique de projection (50) présentant un axe optique (A) et un foyer objet F_{L},
- un réflecteur (30) comprenant deux cavités (31, 32) comportant chacune une surface de réflexion pour réfléchir les rayons lumineux en provenance de la source de lumière (20) vers l'optique de projection (50),
- un dispositif de coupure (40) conçu pour masquer une partie du faisceau lumineux, le dispositif de coupure (40) comprenant un bord de coupure (42) transversal, le bord de coupure étant agencé au niveau du foyer objet F_{L} de l'optique de projection (50), chacune des cavités (31, 32) étant agencée de part et d'autre d'un plan P' axial comprenant l'axe optique (A), la surface de réflexion de chaque cavité (31, 32) étant divisée en une partie latérale (31b, 32b) et une partie centrale (31a, 32a) de la cavité (31, 32), la partie centrale (31a, 32a) de chaque cavité (31, 32) étant agencée le long du plan axial (P'), la partie latérale (31b, 32b) de chaque cavité (31, 32) étant située transversalement à distance du plan axial (P'), chaque surface de réflexion présentant un unique foyer objet qui est confondu avec la source lumineuse (20),
la partie latérale (31b, 32b) de chaque cavité présentant un unique foyer image (F_{R}') confondu ou sensiblement confondu avec le foyer objet (F_{L}) de l'optique de projection (50), et
la partie centrale (31a, 32a) de chaque cavité (31, 32) comprenant plusieurs foyers images distincts du foyer objet (F_{L}) de l'optique de projection (50),
**caractérisé en ce que** les cavités (31, 32) sont conçues de sorte que les rayons lumineux (α₁, α₂) réfléchis par les parties centrales (31a, 32a) du réflecteur (30) passent à travers une partie centrale (57) de l'optique de projection (50), la partie centrale (57) de l'optique de projection (50) s'étendant au voisinage d'une intersection entre l'optique de projection (50) et le plan (P'), les rayons lumineux (β₁, β₂) réfléchis par les parties latérales (31b, 32b) du réflecteur (30) passant à travers deux parties latérales (56, 58) de l'optique de projection (50) situées transversalement de part et d'autre de la partie centrale (57) de l'optique de projection (50),
les rayons lumineux (β₁, β₂) passant par les parties latérales (31b, 32b) de chaque cavité (31, 32) se propagent parallèlement à l'axe optique (A) après leur passage par l'optique de projection (50) de manière à éclairer à l'infini, les rayons lumineux (α₁, α₂) passant par les parties centrales (31a, 32a) de chaque cavité (31, 32) étant projetés selon une direction non parallèle à l'axe optique (A) après leur passage par l'optique de projection (50) de manière à éclairer latéralement de part et d'autre du plan (P').

2. Module optique (10) selon la revendication précédente dans lequel les surfaces de réflexion des cavités (31, 32) sont symétriques ou sensiblement symétriques par rapport au plan (P').

3. Module optique (10) selon l'une quelconque des revendications précédentes dans lequel le dispositif de coupure (40) est une plaque réfléchissante comprenant une surface réfléchissante (44), notamment confondue avec un plan (P) axial transversal et perpendiculaire au plan (P'), conçue pour réfléchir une partie des rayons lumineux des cavités (31, 32) vers l'optique de projection (50).

4. Module optique (10) selon la revendication précédente dans lequel la source de lumière (20) présente un axe principal d'émission (S) perpendiculaire au plan (P).

5. Module optique (10) selon l'une quelconque des revendications précédentes dans lequel le dispositif de coupure (40) est un cache conçu pour arrêter la propagation d'une partie des rayons lumineux vers l'optique de projection (50).

6. Module optique (10) selon l'une quelconque des revendications précédentes, dans lequel les foyers images des parties centrales (31a, 32a) de chaque cavité (31, 32) sont sensiblement alignées le long de l'axe optique (A).

7. Module optique (10) selon l'une quelconque des revendications précédentes comprenant deux sources de lumière (20), chaque source de lumière (20) émettant un faisceau lumineux respectivement vers l'une ou l'autre des cavités (31, 32).

## Patentansprüche

1. Optisches Modul (10), insbesondere für ein Kraftfahrzeug, das Folgendes beinhaltet:
- eine Lichtquelle (20), die Lichtstrahlen emittiert,
- eine Projektionsoptik (50), die eine optische Achse (A) und einen Objektbrennpunkt F_{L} aufweist,
- einen Reflektor (30), der zwei Aushöhlungen (31, 32) beinhaltet, die jeweils eine Reflexionsoberfläche umfassen, um die Lichtstrahlen aus Richtung der Lichtquelle (20) zu der Projektionsoptik (50) zu reflektieren,
- eine Abschattungsvorrichtung (40), die dazu ausgelegt ist, einen Teil des Lichtbündels abzudecken, wobei die Abschattungsvorrichtung (40) eine transversale Abschattungskante (42) beinhaltet, wobei die Abschattungskante im Bereich des Objektbrennpunkts F_{L} der Projektionsoptik (50) eingerichtet ist,
wobei jede der Aushöhlungen (31, 32) auf jeweils einer Seite einer axialen Ebene P', die die optische Achse (A) beinhaltet, eingerichtet ist, wobei die Reflexionsoberfläche jeder Aushöhlung (31, 32) in einen seitlichen Teil (31b, 32b) und einen mittigen Teil (31a, 32a) der Aushöhlung (31, 32) unterteilt ist, wobei der mittige Teil (31a, 32a) jeder Aushöhlung (31, 32) entlang der axialen Ebene (P') eingerichtet ist, wobei der seitliche Teil (31b, 32b) jeder Aushöhlung (31, 32) transversal mit einem Abstand zu der axialen Ebene (P') eingerichtet ist, wobei jede Reflexionsoberfläche einen einzigen Objektbrennpunkt aufweist, der mit der Lichtquelle (20) zusammenfällt,
wobei der seitliche Teil (31b, 32b) jeder Aushöhlung einen einzigen Bildbrennpunkt (F_{R}') aufweist, der mit dem Objektbrennpunkt (F_{L}) der Projektionsoptik (50) zusammenfällt oder im Wesentlichen zusammenfällt, und
wobei der mittige Teil (31a, 32a) jeder Aushöhlung (31, 32) mehrere Bildbrennpunkte aufweist, die sich von dem Objektbrennpunkt (F_{L}) der Projektionsoptik (50) unterscheiden,
**dadurch gekennzeichnet, dass** die Aushöhlungen (31, 32) so ausgelegt sind, dass die Lichtstrahlen (α₁, α₂), die von den mittigen Teilen (31a, 32a) des Reflektors (30) reflektiert werden, durch einen mittigen Teil (57) der Projektionsoptik (50) verlaufen, wobei sich der mittige Teil (57) der Projektionsoptik (50) im Bereich einer Schnittstelle zwischen der Projektionsoptik (50) und der Ebene (P') erstreckt, wobei die Lichtstrahlen (β₁, β₂), die von den seitlichen Teilen (31b, 32b) des Reflektors (30) reflektiert werden, durch zwei seitliche Teile (56, 58) der Projektionsoptik (50), die sich transversal zu beiden Seiten des mittigen Teils (57) der Projektionsoptik (50) befinden, verlaufen,
wobei die Lichtstrahlen (β₁, β₂), die durch die seitlichen Teile (31b, 32b) jeder Aushöhlung (31, 32) verlaufen, sich nach ihrem Verlauf durch die Projektionsoptik (50) parallel zu der optischen Achse (A) ausbreiten, sodass sie eine unendlich weite Beleuchtung bereitstellen, wobei die Lichtstrahlen (α₁, α₂), die durch die mittigen Teile (31a, 32a) jeder Aushöhlung (31, 32) verlaufen, nach ihrem Verlauf durch die Projektionsoptik (50) gemäß einer zu der optischen Achse (A) nicht parallelen Richtung projiziert werden, sodass sie zu beiden Seiten der Ebene (P') eine seitliche Beleuchtung bereitstellen.

2. Optisches Modul (10) nach dem vorhergehenden Anspruch, wobei die Reflexionsoberflächen der Aushöhlungen (31, 32) in Bezug auf die Ebene (P') symmetrisch oder im Wesentlichen symmetrisch sind.

3. Optisches Modul (10) nach einem beliebigen der vorhergehenden Ansprüche, wobei die Abschattungsvorrichtung (40) eine reflektierende Platte ist, die eine reflektierende Oberfläche (44) beinhaltet, die insbesondere mit einer transversalen axialen Ebene (P), die zu der Ebene (P') senkrecht ist, zusammenfällt und dazu ausgelegt ist, einen Teil der Lichtstrahlen der Aushöhlungen (31, 32) zu der Projektionsoptik (50) zu reflektieren.

4. Optisches Modul (10) nach dem vorhergehenden Anspruch, wobei die Lichtquelle (20) eine Hauptemissionsachse (S) aufweist, die zu der Ebene (P) senkrecht ist.

5. Optisches Modul (10) nach einem beliebigen der vorhergehenden Ansprüche, wobei die Abschattungsvorrichtung (40) eine Abdeckung ist, die dazu ausgelegt ist, die Ausbreitung eines Teils der Lichtstrahlen zu der Projektionsoptik (50) zu stoppen.

6. Optisches Modul (10) nach einem beliebigen der vorhergehenden Ansprüche, wobei die Bildbrennpunkte der mittigen Teile (31a, 32a) jeder Aushöhlung (31, 32) im Wesentlichen entlang der optischen Achse (A) ausgerichtet sind.

7. Optisches Modul (10) nach einem beliebigen der vorhergehenden Ansprüche, das zwei Lichtquellen (20) beinhaltet, wobei jede Lichtquelle (20) ein Lichtbündel zu jeweils der einen oder der anderen der Aushöhlungen (31, 32) emittiert.

## Claims

1. Optical module (10), particularly for a motor vehicle, comprising:
- a light source (20) emitting light rays,
- a projection optic (50) having an optical axis (A) and an object focal point F_{L},
- a reflector (30) comprising two cavities (31, 32) each comprising a reflection surface for reflecting the light rays originating from the light source (20) towards the projection optic (50),
- a cutoff device (40) designed to mask some of the light beam, the cutoff device (40) comprising a transverse cutoff edge (42), the cutoff edge being arranged at the object focal point F_{L} of the projection optic (50),
each of the cavities (31, 32) being arranged on either side of an axial plane P' comprising the optical axis (A), the reflection surface of each cavity (31, 32) being divided into a lateral part (31b, 32b) and a central part (31a, 32a) of the cavity (31, 32), the central part (31a, 32a) of each cavity (31, 32) being arranged along the axial plane (P'), the lateral part (31b, 32b) of each cavity (31, 32) being located transversely at a distance from the axial plane (P'), each reflection surface having a single object focal point which coincides with the light source (20),
the lateral part (31b, 32b) of each cavity having a single image focal point (F_{R}') coinciding or substantially coinciding with the object focal point (F_{L}) of the projection optic (50), and
the central part (31a, 32a) of each cavity (31, 32) comprising a plurality of image focal points which are distinct from the object focal point (F_{L}) of the projection optic (50),
**characterized in that** the cavities (31, 32) are designed so that the light rays (α₁, α₂) reflected by the central parts (31a, 32a) of the reflector (30) pass through a central part (57) of the projection optic (50), the central part (57) of the projection optic (50) extending in the vicinity of an intersection between the projection optic (50) and the plane (P'),
the light rays (β₁, β₂) reflected by the lateral parts (31b, 32b) of the reflector (30) passing through two lateral parts (56, 58) of the projection optic (50) located transversely on either side of the central part (57) of the projection optic (50), the light rays (β₁, β₂) passing through the lateral parts (31b, 32b) of each cavity (31, 32) propagate parallel to the optical axis (A) after they pass through the projection optic (50) so as to illuminate at infinity, the light rays (α₁, α₂) passing through the central parts (31a, 32a) of each cavity (31, 32) being projected in a direction which is not parallel to the optical axis (A) after they pass through the projection optic (50) so as to illuminate laterally on either side of the plane (P').

2. Optical module (10) according to the preceding claim, wherein the reflection surfaces of the cavities (31, 32) are symmetrical or substantially symmetrical relative to the plane (P').

3. Optical module (10) according to either one of the preceding claims, wherein the cutoff device (40) is a reflective plate comprising a reflective surface (44), particularly coinciding with an axial plane (P) which is transverse and perpendicular to the plane (P'), designed to reflect some of the light rays from the cavities (31, 32) towards the projection optic (50).

4. Optical module (10) according to the preceding claim, wherein the light source (20) has a main emission axis (S) which is perpendicular to the plane (P).

5. Optical module (10) according to any one of the preceding claims, wherein the cutoff device (40) is a shield designed to stop the propagation of some of the light rays towards the projection optic (50).

6. Optical module (10) according to any one of the preceding claims, wherein the image focal points of the central parts (31a, 32a) of each cavity (31, 32) are substantially aligned along the optical axis (A).

7. Optical module (10) according to any one of the preceding claims, comprising two light sources (20), each light source (20) emitting a light beam towards one or other of the cavities (31, 32), respectively.
